# EUROPÄISCHE PATENTSCHRIFT

(11) **EP 2 440 595 B1**
(45) Veröffentlichungstag und Bekanntmachung des Hinweises auf die Patenterteilung: **23.07.2014**
(21) Anmeldenummer: 10718057.2
(22) Anmeldetag: 08.03.2010
(51) Int. Cl.: C08G 18/16, C08G 18/18, C08G 18/20, C08G 18/67, C09D 175/04, C08K 5/29, C08K 5/3465

(54) **BESCHICHTUNGSMITTEL UND DARAUS HERGESTELLTE BESCHICHTUNGEN MIT HOHER KRATZFESTIGKEIT UND HOHER KOCHERSTABILITÄT**
COATING AGENTS AND COATINGS PRODUCED THEREFROM HAVING HIGH SCRATCH RESISTANCE AND HIGH BLISTERING RESISTANCE
AGENTS DE REVÊTEMENT ET REVÊTEMENTS PRÉSENTANT UNE RÉSISTANCE ÉLEVÉE AUX RAYURES AINSI QU'UNE GRANDE STABILITÉ AU CLOQUAGE FABRIQUÉS À PARTIR DESDITS AGENTS

(30) Priorität: 06.06.2009 DE 102009024103
(43) Veröffentlichungstag der Anmeldung: 18.04.2012
(73) Patentinhaber: BASF Coatings GmbH, 48165 Münster (DE)
(72) Erfinder: POPPE, Andreas, 97753 Karlstadt (DE); WOLTERING, Joachim, 48159 Münster (DE); GEBAUER, Beate, 48165 Münster (DE); KÖNIG, Alfred, 48291 Telgte (DE); JURCZIK, Simone, 48308 Senden (DE)
(74) Vertreter: Leifert & Steffan
(86) Internationale Anmeldenummer: PCT/EP2010/001421
(87) Internationale Veröffentlichungsnummer: WO 2010/139375

(56) Entgegenhaltungen:
- WO-A1-2007/033826
- DE-A1- 4 132 430

## Beschreibung

Gegenstand der vorliegenden Erfindung sind Beschichtungsmittel enthaltend mindestens eine hydroxylgruppenhaltige Verbindung (A), mindestens eine isocyanatgruppenhaltige Verbindung (B) und mindestens 5,0 Gew.-%, bezogen auf die nichtflüchtigen Bestandteile des Beschichtungsmittels, mindestens eines Aminoplastharzes (C).

Außerdem betrifft die Erfindung mehrstufige Beschichtungsverfahren unter Verwendung dieser Beschichtungsmittel sowie die Verwendung der Beschichtungsmittel als Klarlack beziehungsweise die Anwendung des Beschichtungsverfahren für die Automobilserienlackierung und die Autoreparaturlackierung.

In der EP 991 729 B1 sind Beschichtungsmittel der eingangs genannten Art beschrieben, die zu einer ungetrübten, brillanten und säurefesten Klarlackschicht ausgehärtet werden können. Als Katalysator enthalten die dort beschriebenen Beschichtungsmittel übliche Säurekatalysatoren, wie beispielsweise Phosphorsäure, saure Organophosphate oder insbesondere aromatische Sulphonsäuren, die bevorzugt in blockierter Form, beispielsweise mit Amin blockiert, eingesetzt werden.

Nachteilig beim Einsatz derartig komplexer Mischungen ist, dass häufig eine vergleichsweise hohe Katalysatorkonzentration notwendig ist, um das gewünschte Eigenschaftsprofil zu erreichen. Die eingesetzten Katalysatoren wirken jedoch oft nicht selektiv auf die einzelnen Vernetzungsteilreaktionen, sondern beeinflussen simultan die verschiedenen Reaktionen, z. B. Melaminkondensationsreaktionen und Isocyanatadditionsreaktionen. Dies kann zu Störungen im Rahmen der Applikation, z. B. zur Kocherneigung, führen. Des weiteren können bei den dort beschriebenen Beschichtungsmittein auch Unverträglichkeiten im Spritznebel hervorgerufen werden.

Beschichtungsmittel, die hydroxylgruppenhaltige Verbindungen, isocyanatgruppenhaltige Verbindungen und Aminoplastharze enthalten, sind auch aus EP 1 171 356 B1 oder aus den internationalen Patentanmeldungen WO 01/09261, WO 01/09260, WO 01/09259 oder WO 01/09231 bekannt. Als Katalysator für die thermische Vernetzung wird eine alkoholische Lösung von Phenylphosphat in alkoholischer Lösung verwendet. Diese Beschichtungsmittel werden bevorzugt als Zweikomponentensystem hergestellt, bei denen eine Komponente die hydroxylgruppenhaltigen Verbindungen und ggf. das Aminoplastharz und die andere Komponente die isocyanatgruppenhaltigen Verbindungen enthält. Diese Beschichtungsmittel liefern Beschichtungen, die hart, abriebfest, kratzfest und säurefest sind sowie als Klarlackierungen hochglänzend und klar sind.

Allerdings kann die alkoholische Lösung des sauren Phenylphosphats wegen der hohen Reaktivität der isocyanatgruppenhaltigen Verbindungen gegenüber Alkoholen nur der Bindemittelkomponente zugesetzt werden, was aber deren Reativität so stark erhöhen kann, dass ihre Lagerstabilität in Mitleidenschaft gezogen wird. Außerdem weisen die Beschichtungsmittel oft eine Topfzeit auf, die sich in der Praxis als zu kurz erweist, wodurch im Lackierbetrieb logistische und technische Probleme entstehen. Nicht zuletzt kann dies auch zu nicht akzeptablen Lackierergebnissen führen.

Bei Verwendung von Aminoplastharzen kann es außerdem durch die Kombination der verschiedenen Vernetzungsmechanismen zu einer Vielzahl von verschiedenen Reaktionen kommen, die sich gegenseitig beeinflussen, was unter Umständen zu einer Verschlechterung einzelner Eigenschaften führen kann.

Aus der DE 10 2005 0 45 150.0 A1 sind Beschichtungsmittel der eingangs genannten Art bekannt, die als Katalysator Phosphonsäurediester und Diphosphonsäurediester enthalten. Da es sich bei diesen Katalysatoren um vergleichsweise schwache Säuren handelt, müssen sie in unverhältnismässig hohen Mengen zugegeben werden. Gerade dann, wenn mit derartig hohen Konzentrationen gearbeitet wird, kommt es auch aufgrund der Komplexität derartiger Formulierungen - insbesondere im Rahmen von mehrschichtigen Lackierungen - zu unerwünschten Effekten im Rahmen des Lackierprozesses. Insbesondere das Auftreten von Kochern in Abhängigkeit von der Schichtdicke des Untergrundes oder das Auftreten von Kochern durch den Einfluss von vorgelegtem oder nachgelegtem Spritznebel ist ein Phänomen, welches in derartigen Systemen des Öfteren auftreten kann.

Ferner sind aus der noch nicht offengelegten Patentanmeldung DE 10 2007 0 61 855.9-43 Beschichtungsmittel bekannt, die mindestens eine hydroxylgruppenhaltige Verbindung, mindestens eine isocyanatgruppenhaltige Verbindung, mindestens einen phosphorhaltigen Katalysator und mindestens ein bicyclisches Amin enthalten, wobei ein oder mehrere Bestandteile des Beschichtungsmittels, bevorzugt die isocyanatgruppenhaltigen Verbindungen, hydrolysierbare Silangruppen in einer Menge von 2,5 bis 97,5 mol-%, jeweils bezogen auf die Summe aus Hydroxylgruppen, Isocyanatgruppen und hydrolysierbaren Silangruppen, aufweisen. Aufgrund der Modifizierung mindestens eines Bestandteils des Beschichtungsmittels, insbesondere der isocyanatgruppenhaltigen Verbindungen, mit Silanen weisen die resultierenden Beschichtungen eine sehr gute Kratzfestigkeit auf.

Schließlich offenbart das Dokument DE 41 32 430 A1 Lacke zur Herstellung von Automobildecklackierungen, die eine verringerte Neigung zur Kocherbildung aufweisen. Unter *"Kochern"* werden auf Gasblasen zurückzuführende Störungen im Lackfilm verstanden (siehe Spalte 1, Zeilen 37-47 von DE 41 32 430 A1). Diese Lacke enthalten ein hydroxylgruppenhaltiges Polyacrylatharz, ein Polyisocyanat und mindestens 5 Gew.-% eines Aminoplastharzes.

### Aufgabe

Der vorliegenden Erfindung lag daher die Aufgabe zu Grunde, Beschichtungsmittel, insbesondere für die Klarlackschicht bei Automobilserien-lackierungen und bei Autoreparaturlackierungen, zur Verfügung zu stellen, die zu Beschichtungen mit einer hohen Kratzfestigkeit bei einer gleichzeitig guten Säurefestigkeit und gleichzeitig einem sehr guten optischen Gesamteindruck (so genanntem sehr guten Appearance) führen.

Insbesondere das Auftreten von Kochern in Abhängigkeit von der Schichtdicke des Untergrundes sowie das Auftreten von Kochern durch den Einfluss von vorgelegtem oder nachgelegtem Spritznebel soll vermieden werden.

### Lösung der Aufgabe

Im Lichte der oben genannten Aufgabenstellung wurden Beschichtungsmittel gefunden, enthaltend mindestens eine hydroxylgruppenhaltige Verbindung (A), mindestens eine isocyanatgruppenhaltige Verbindung (B), mindestens 5,0 Gew.-%, bezogen auf die nichtflüchtigen Bestandteile des Beschichtungsmittels, mindestens eines Aminoplastharzes (C), welches dadurch gekennzeichnet ist, dass das Beschichtungsmittel mindestens ein ungesättigtes cyclisches, sterisch gehindertes Amin (D) enthält und dass das Beschichtungsmittel weniger als 2,5 mol-%, bezogen auf die Summe aus Hydroxylgruppen, Isocyanatgruppen und hydrolysierbaren Silangruppen, an hydrolysierbaren Silangruppen enthält.

Außerdem betrifft die Erfindung mehrstufige Beschichtungsverfahren unter Verwendung dieser Beschichtungsmittel sowie die Verwendung der Beschichtungsmittel als Klarlack und die Anwendung des Beschichtungsverfahrens für die Automobilserienlackierung und die Automobilreparaturlackierung.

Im Hinblick auf den Stand der Technik war es überraschend und für den Fachmann nicht vorhersehbar, dass die Aufgaben, die der vorliegenden Erfindung zu Grunde lagen, mit Hilfe des erfindungsgemäßen Beschichtungsmittels gelöst werden konnten. So ist es insbesondere überraschend, dass durch den Zusatz mindestens eines ungesättigten, cyclischen, sterisch gehinderten Amins das Auftreten von Kochern in Abhängigkeit von der Schichtdicke des Untergrundes sowie das Auftreten von Kochern durch den Einfluss von vorgelegtem oder nachgelegtem Spritznebel vermieden werden konnte, ohne dass durch den Zusatz dieser Amine die weiteren Eigenschaften der resultierenden Beschichtungen, wie insbesondere die Säurefestigkeit, die Kratzfestigkeit und der optische Gesamteindruck (das so genannte Appearance) negativ beeinflusst werden. Deswegen können die erfindungsgemäßen Beschichtungen und Lackierungen, insbesondere die Klarlackierungen, in dem technologisch und ästhetisch besonders anspruchsvollen Gebiet der Automobilserienlackierung eingesetzt werden.

Schließlich können die erfindungsgemäßen Beschichtungsmittel besonders einfach und sehr gut reproduzierbar hergestellt werden und bereite bei der Lackapplikation keine signifikanten toxikologischen und ökologischen Probleme.

### Beschreibung der Erfindung

### Das erfindungsgemäße Beschichtungsmittel

Das erfindungsgemäße Beschichtungsmittel zeichnet sich dadurch aus, dass es weniger als 2,5 mol-%, insbesondere weniger als 1 mol-% und ganz besonders bevorzugt weniger als 0,5 mol-%, jeweils bezogen auf die Summe aus Hydroxylgruppen, Isocyanatgruppen und hydrolysierbaren Silangruppen, an hydrolysierbaren Silangruppen enthält.

Unter hydrolysierbaren Silangruppen werden dabei üblicherweise Gruppen verstanden, die an Silicium gebundene, durch Feuchtigkeit hydrolysierbare Reste aufweisen. Die hydrolysierbaren Silangruppen können beispielsweise an Silicium gebundene Halogenreste, insbesondere Chlor und Brom, oder an Silicium gebundene Alkoxygruppen, Alkylcarbonylgruppen und Acyloxygruppen sein. Besonders bevorzugte hydrolysierbaren Silangruppen sind Alkoxysilangruppen Si(OR').

Insbesondere enthält das Beschichtungsmittel weniger als 2,5 mol-%, insbesondere weniger als 1 mol-% und ganz besonders bevorzugt weniger als 0,5 mol-%, bezogen auf die Summe aus Hydroxylgruppen, Isocyanatgruppen und Struktureinheiten (I), an Struktureinheiten der Formel (I)

-X-Si-R"xG3-x (I)

mit
G = identische oder unterschiedliche hydrolysierbare Gruppen,
X = organischer Rest, insbesondere linearer und/oder verzweigter Alkylen- oder Cycloalkylenrest mit 1 bis 20 Kohlenstoffatomen, ganz besonders bevorzugt X = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
x = 0 bis 2, bevorzugt 0 bis 1, besonders bevorzugt x = 0.

Die hydrolysierbaren Gruppen G können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen. Besonders bevorzugt sind Alkoxygruppen (OR').

Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

### Die hydroxylgruppenhaltigen Verbindungen (A)

Als hydroxylgruppenhaltige Verbindungen (A) werden vorzugsweise sowohl niedermolekulare Polyole als auch oligo- und/oder polymere Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerytritol sowie Dipentaerytritol, eingesetzt.

Bevorzugt werden solche niedermolekularen Polyole in untergeordneten Anteilen der oligo- und/oder polymeren Polyolkomponente (A) beigemischt.

Die bevorzugten oligo- und/oder polymeren Polyole (A) weisen massenmittlere Molekulargewichte Mw > 500 Dalton, gemessen mittels GPC (Gelpermeationschromatographie), bevorzugt zwischen 800 und 100.000 Dalton, insbesondere zwischen 1.000 und 50.000 Dalton auf. Besonders bevorzugt sind Polyesterpolyole, Polyurethanpolyole, Polysiloxanpolyole und insbesondere Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf.

Die Glasübergangstemperaturen, gemessen per DSC (DifferentialThermoanalyse), der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben.

Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

**Die Glasübergangstemperatur der Copolymerisate liegt in der Regel zwischen -100 und 100 °C, insbesondere zwischen -50 und 80 °C (gemessen mittels DSC-Messungen),**

Die Polyacrylatpolyole und/oder Polymethacrylatpolyole (A) weisen bevorzugt eine OH-Zahl von 60 bis 300 mg KOH/g, insbesondere zwischen 100 und 250 mgKOH/g, ganz besonders zwischen 150 und 190 mgKOH/g, auf. Die Hydroxylzahl (OH-Zahl) gibt an, wieviel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Die Polyacrylatpolyole weisen bevorzugt eine Säurezahl zwischen 0 und 30 mg KOH/g auf. Die Säurezahl gibt hierbei die Anzahl der mg Kaliumhydroxyid an, die zur Neutralisation von 1 g der jeweiligen Verbindung der Komponente (b) verbraucht wird (DIN EN ISO 2114).

Auch durch die Auswahl der **hydroxylgruppenhaltigen** Bindemittel können die Eigenschaften der endgehärteten Beschichtung beeinflusst werden. Im Allgemeinen nimmt nämlich mit steigender OH-Zahl der Komponente (A) die Kratzfestigkeit der resultierenden Beschichtung zu. Allerdings sollte die OH-Zahl auch nicht zu hoch gewählt werden, da sonst keine vollständige Vernetzung stattfinden kann.

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2- Hydroxypropylmethacrylat, 3-Hydroxypropylacrylat, 3-Hydroxypropylmethacrylat , 3-Hydroxybutylacrylat, 3-Hydroxybutylmethacrylat sowie insbesondere 4-Hydroxybutylacrylat und/oder 4-Hydroxybutylmethacrylat, eingesetzt.

Als weitere Monomerbausteine werden für die Polyacrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Als Bindemittel (BM) werden bevorzugt (Meth)Acrylatcopolymerisate eingesetzt, die erhältlich sind, indem
(a1) 10 bis 80 Gew.- %, bevorzugt 20 bis 60 Gew.- %, 3-Hydroxypropylacrylat oder 3-Hydroxypropylmethacrylat oder 2-Hydroxy propylacrylat oder 2-Hydroxypropylmethacrylat oder 2-Hydroxyethylacrylat oder 2-Hydroxyethylmethacrylat oder 4-Hydroxy-n-butylacrylat oder 4-Hydroxy-n-butylmethacrylat oder Mischungen dieser Monomeren,
(b1) 0 bis 30 Gew.- %, bevorzugt 0 bis 15 Gew.- % eines von (a1) verschiedenen hydroxylgruppenhaltigen Esters der Acrylsäure oder eines hydroxylgruppenhaltigen Esters der Methacrylsäure oder eines Gemisches aus solchen Monomeren,
(c1) 0 bis 90 Gew.- %, bevorzugt 10 bis 70 Gew.- %, eines von (a1) und (b1) verschiedenen aliphatischen oder cycloaliphatischen Esters der (Meth)acrylsäure mit mindestens 4 Kohlenstoffatomen im Alkoholrest oder eines Gemisches aus solchen Monomeren,
(d1) 0 bis 3 Gew.- %, bevorzugt 0,5 bis 2 Gew.- %, einer ethylenisch ungesättigten Carbonsäure oder einer Mischung aus ethylenisch ungesättigten Carbonsäuren und
(e1) 0 bis 50 Gew.- %, bevorzugt 5 bis 35 Gew.- %, eines Vinylaromaten und/oder eines von (a1), (b1), (c1) und (d1) verschiedenen ethylenisch ungesättigten Monomeren oder eines Gemisches aus solchen Monomeren
copolymerisiert werden, wobei die Summe der Gewichtsanteile der Komponenten (a1), (b1), (c1), (d1) und (e1) stets 100 Gew.-% ergibt.

Die hydroxylgruppenhaltigen Verbindungen (A) werden üblicherweise in einer Menge von 20 bis 70, bevorzugt von 30 bis 65 Gew.-%, jeweils bezogen auf die nichtflüchtigen Bestandteile des Beschichtungsmittels, eingesetzt.

### Die isocyanatgruppenhaltigen Verbindungen (B)

Als Komponente (B) enthalten die erfindungsgemäßen Beschichtungsmittel eine oder mehrere Verbindungen mit freien, d.h. unblockierten, und/oder blockierten Isocyanatgruppen. Bevorzugt enthalten die erfindungsgemäßen Beschichtungsmittel Verbindungen (B) mit freien Isocyanatgruppen. Die Isocyanatgruppen der isocyanatgruppenhaltigen Verbindungen (B) können aber auch in blockierter Form eingesetzt werden. Dies ist bevorzugt dann der Fall, wenn die erfindungsgemäßen Beschichtungsmittel als einkomponentige Systeme eingesetzt werden.

Die erfindungsgemäß eingesetzten isocyanatgruppenhaltigen Verbindungen (B) sind bevorzugt an sich bekannte substituierte oder unsubstituierte aromatische, aliphatische, cycloaliphatische und/oder heterocyclische Di- und/oder Polyisocyanate. Beispiele für bevorzugte Di- und/oder Polyisocyanate sind: 2,4-Toluoldiisocyanat, 2,6-Toluoldiisocyanat, Diphenylmethan-4,4'-diiocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiiso-cyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Di- und/oder Polyisocyanate sind Hexamethylen-1,6-diisocyanat, Isophorondiisocyanat und 4,4'-Methylendicyclohexyldiisocyanate, deren Biuret-Dimere und/oder Isocyanurat-Trimere.

In einer weiteren Ausführungsform der Erfindung sind die Di- und/oder Polyisocyanate Polyisocyanat-Präpolymerisate mit Urethan-Struktureinheiten, welche durch Umsetzung von Polyolen mit einem stöchiometrischen Überschuß an vorgenannten Polyisocyanaten erhalten werden. Solche Polyisocyanat-Präpolymere sind beispielsweise in US-A-4,598,131 beschrieben.

Bevorzugt sind bei den isocyanatgruppenhaltigen Verbindungen (B) weniger als 2,5 mol-%, insbesondere weniger als 1 mol-%, besonders bevorzugt weniger als 0,5 mol-% und ganz besonders bevorzugt keine der Isocyanatgruppen mit Verbindungen der Formel (IIa)

HN(X-SiR"x(OR')3-x)n(X'-SiR"y(OR')3-y)m (IIa),

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl
X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie x,y = 0 bis 2,
und/oder mit silangruppenhaltigen Verbindungen der Formel (IIIa)

H-Z-(X-SiR"x(OR')3-x) (IIIa),

wobei
Z = -NH-, -NR-,-O-, mit R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2,
X, R', R" die bei Formel (IIa) angegebene Bedeutung haben,
umgesetzt worden.

Die isocyanatgruppenhaltigen Verbindungen (B) werden üblicherweise in einer Menge von 5 bis 50, bevorzugt von 15 bis 45 Gew.-%, besonders bevorzugt von 20 bis 40 Gew.-%, jeweils bezogen auf die nichtflüchtigen Bestandteile des Beschichtungsmittels, eingesetzt.

### Das Aminoplastharz (C)

Es ist erfindungswesentlich, dass das Beschichtungsmittel mindestens 5,0 Gew.-%, bezogen auf die nichtflüchtigen Bestandteile des Beschichtungsmittels, mindestens eines Aminoplastharzes (C) enthält. Bevorzugt enthält das Beschichtungsmittel 8 bis 30 Gew.-%, besonders bevorzugt mehr als 10 bis 25 Gew.-%, jeweils bezogen auf die nichtflüchtigen Bestandteile des Beschichtungsmittels, mindestens eines Aminoplastharzes (C).

Beispiele für geeignete Aminoplastharzes (C) sind alle im Bereich der Lackindustrie üblicherweise eingesetzten Aminoplastharzes, wobei über die Reativität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharzes enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, insbesondere Cymel® 202, Luwipal® 018 und Setamine® US 138 eingesetzt.

Die Aminoplastharze (C) sind altbekannte Verbindungen und werden beispielsweise im Detail in der amerikanischen Patentanmeldung US 2005/0182189 A1, Seite 1, Absatz [0014], bis Seite 4, Absatz [0028], beschrieben.

### Das ungesättigte, cyclische, sterisch gehinderte Amin (D)

Es ist erfindungswesentlich, dass das Beschichtungsmittel mindestens ein ungesättigtes, cyclisches, sterisch gehindertes Amin (D) enthält. Bevorzugt enthält das Beschichtungsmittel mindestens ein ungesättigtes, bicyclisches, sterisch gehindertes Amin (D). Ganz besonders bevorzugt enthält das Beschichtungsmittel als Armin (D) 1,5-Diazabicyclo[4.3.0]non-5-en (kurz DBN genannt) oder 1,8-Diazabicyclo[5.4.0]undec-7-en (kurz DBU genannt).

Das ungesättigte, cyclische, sterisch gehinderte Armin (D) wird bevorzugt in einer Menge von 0,001 bis 1,0 Gew.-%, besonders bevorzugt in einer Menge von 0,01 bis 0,5 Gew.-%, bezogen auf die nichtflüchtigen Bestandteile des Beschichtungsmittels, eingesetzt.

Es ist zwar aus der US 5,6 191,4 139 bekannt, dass bestimmte tertiäre Amine, wie beispielsweise Triethylamin, Pyridine oder gesättigte cyclische Amin, wie beispielsweise Diazabicyclo[2,2,2]octan, die Reaktionen von hydroxylgruppenhaltigen Verbindungen mit Isocyanatgruppen katalysieren. Vielfach jedoch führt der Einsatz derartiger Katalysatoren für die Reaktionen von Isocyanatgruppen mit Hydroxylgruppen zu einer Inhibierung der Melamin - Vernetzung. Je nach eingesetztem Amin kann auch ein geringerer Umsatz der Isocyanatgruppen, als der, der z.B. bei Triethylamin erreicht wird, beobachtet werden. Eine solche Inhibierung oder Reduktion des Isocyanatgruppenumsatzes kann unter anderem in einer schlechteren Chemikalienbeständigkeit der resultierenden Oberflächen resultieren.

Außerdem ist es bekannt, dass Beschichtungsmittel, die mindestens 5,0 Gew.-%, bezogen auf die nichtflüchtigen Bestandteile des Beschichtungsmittels, mindestens eines Aminoplastharzes enthalten, häufig eine erhöhte Kocherneigung aufweisen, die insbesondere darauf zurückgeführt werden kann, dass in einem hohen Maße Kondensationsprodukte freigesetzt werden.

Es ist daher überraschend, dass durch die erfindungsgemäße Verwendung von ungesättigten, cyclischen, sterisch gehinderten Aminen (D) sowohl die Reaktion der Hydroxylgruppen mit den Isocyanatgruppen katalysiert wird als auch, dass die Melamin - Vernetzung nicht inhibiert wird. Vor allem aber ist es überraschend, dass durch den erfindungsgemäßen Einsatz der ungesättigten, cyclischen, sterisch gehinderten Amine (D) die Kocherneigung der Beschichtungen verringert wird, ohne die weiteren Eigenschaften wie Appearance und die Chemikalienbeständigkeit der resultierenden Lackfilme, negativ zu beeinflussen, selbst wenn die Beschichtungsmittel mindestens 5,0 Gew.-% Aminoplastharz enthalten. Insbesondere zeichnen sich die erfindungsgemäßen Beschichtungsmittel sowohl durch eine verringerte Kocherneigung in Abhängigkeit von der Schichtdicke des Untergrundes als auch durch eine verringerte Kocherneigung durch den Einfluss von vorgelegtem oder nachgelegtem Spritznebel aus.

### Weitere Katalysatoren (K)

Die erfindungsgemäßen Beschichtungsmittel können gegebenenfalls noch weitere Katalysatoren enthalten. Insbesondere können die erfindungsgemäßen Beschichtungsmittel noch mindestens einen säurehaltigen Katalysator (K) enthalten.

Beispielsweise können die erfindungsgemäßen Beschichtungsmittel noch einen oder mehrere Katalysatoren auf Sulphonsäure - Basis enthalten. So können die erfindungsgemäßen Beschichtungsmittel beispielsweise noch p-Toluol - Sulphonsäure, Dodecylbenzyl -Sulphonsäure oder Dinonyl naphthalin-Sulphonsäure, enthalten.Bevorzugt enthalten sie als säurehaltige Katalysatoren Phosphorsäureester und/oder Phosphorsäureteilester. In der Regel, insbesondere bei der Verwendung starker Säuren, ist es zweckmäßig, die Säurekatalysatoren in blockierter Form, beispielsweise mit Amin blockiert, einzusetzen. Daraus kann die Säure thermisch wieder freigesetzt werden.

Ganz besonders bevorzugt werden als Katalysator (K) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Diese säurehaltigen Katalysatoren (K) werden üblicherweise in einer Menge von 0,01 bis 6,0 Gew.-%, bevorzugt von 0,1 bis 5,0 Gew.-%, besonders bevorzugt in Anteilen von 0,5 bis 3,0 Gew.-%, jeweils bezogen auf die nichtflüchtigen Bestandteile des Beschichtungsmittels, eingesetzt.

### Weitere Bestandteile des Beschichtungsmittel und Applikation der Beschichtungsmittel

Die erfindungsgemäßen Beschichtungsmittel enthalten üblicherweise noch mindestens ein organisches Lösemittel. Als Lösemittel für die erfindungsgemäßen Beschichtungsmittel sind insbesondere solche geeignet, die im Beschichtungsmittel chemisch inert gegenüber den übrigen Bestandteilen des Beschichtungsmittels sind. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln.

Darüber hinaus kann das erfindungsgemäße Beschichtungsmittel mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel und /oder
- die bereits oben aufgeführten Wasserfänger.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung angewandten Temperaturen, die bevorzugt zwischen 30 und 90°C liegen, auch längere Härtzeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind und einen sehr guten optischen Gesamteindruck aufweisen. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) sowie der Automobilreparaturlackierung eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus dem erfindungsgemäßen Beschichtungsmittel hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff., angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung angewandten Temperaturen, die bevorzugt zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus und zeigen gleichzeitig einen sehr guten optischen Gesamteindruck (sehr gutes Appearance).

In einer weiteren bevorzugten Ausführungsform der Erfindung wird das erfindungsgemäße Beschichtungsmittel als transparenter Klarlack zur Beschichtung von Kunststoffsubstraten, insbesondere von transparenten Kunststoffsubstraten, eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch eine herausragende Kombination von Kratzfestigkeit und Witterungsstabilität bei gleichzeitig sehr gutem Appearance aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

Weiterer Gegenstand der vorliegenden Erfindung ist die Verwendung von ungesättigten cyclischen, sterisch gehinderten Aminen, insbesondere von ungesättigten bicyclischen, sterisch gehinderten Aminen in Beschichtungsmitteln enthaltend mindestens eine hydroxylgruppenhaltige Verbindung (A), mindestens eine isocyanatgruppenhaltige Verbindung (B), und mindestens 5,0 Gew.-%, bezogen auf die nichtflüchtigen Bestandteile des Beschichtungsmittels, mindestens eines Aminoplastharzes (C), zur Verbesserung der Kocherstabilität; wobei das Beschichtungsmittel weniger als 2,5 mol-%, bezogen auf die Summe aus Hydroxylgruppen, Isocyanatgruppen und hydrolysierbaren Silangruppen, an hydrolysierbaren Silangruppen enthält.

### Beispiele

### Herstellung eines Polyacrylat - Polyols (A1)

In einem Reaktor, der mit Stickstoff gespült wurde und auf dem ein Kühler angebracht ist, werden 175,0 Gewichtsteile Pentylacetat vorgelegt und unter Rühren auf 140°C aufgeheizt.

Parallel dazu wurden zwei separate Zuläufe prepariert. Zulauf 1 bestand aus 285,8 Gewichtsteilen 2 - Hydroxypropylmethacrylat, 1,50 Gewichtsteilen Acrylsäure, 144,4 Gewichtsteilen Ethylhexylmethacrylat, 68,8 Gewichtsteilen Ethylhexylacrylat und 119,3 Gewichtsteilen Cyclohexylmethacrylat.

Zulauf 2 bestand aus 26,0 Gewichtsteilen Solvent Naphta und 74,4 Gewichtsteilen tert.-Butylperoxy-2-ethylhexanoat (Peroxid TBPEH). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 60 Minuten bei 140°C gerührt. Während dieser Zeit wurde der Zulauf 3 prepariert, der aus 26,5 Gewichtsteilen Solvent Naphta und 6,2 Gewichtsteilen tert.-Butylperoxy-2-ethylhexanoat (Peroxid TBPEH) bestand. Nach Ablauf der Nachpolymerisationszeit wurde die Temperatur auf 110°C abgekühlt und nach Erreichen von 110°C wird der Zulauf 3 gleichmäßig über einen Zeitraum von 60 Minuten zudosiert. Nach Ende der Dosierung von Zulauf 3 wurde das Reaktionsgemisch zur Nachpolymerisation noch 120 Minuten bei 110°C gerührt.

Der Festkörpergehalt des so erhaltenen Produktes wurde zu 66,0 % und die Säurezahl zu 6 mg KOH / g (bezogen auf den Festkörper) bestimmt.

### Herstellung des Thixotropierungsmittels T1

In einem 51 Reaktor, der mit Stickstoff gespült wurde und auf dem ein Kühler angebracht ist, werden 924,00 Gewichtsteile Solventnaphtha vorgelegt und unter Rühren auf 140°C aufgeheizt.

Parallel dazu wurden zwei separate Zuläufe präpariert. Zulauf 1 bestand aus 338,10 Gewichtsteilen Styrol, 253,50 Gewichtsteilen n-Butylmethacrylat, 338,10 Gewichtsteilen 2Hydroxypropylmethacrylat, 16,80 Gewichtsteilen Acrylsäure, 439,50 Gewichtsteilen Cyclohexylmethacrylat und 304,20 Gewichtsteilen 2-Hydroxyethylmethacrylat. Zulauf 2 bestand aus 60,00 Gewichtsteilen Solventnaphtha und 168,90 Gewichtsteilen Peroxid TBPEH (ter.-Butyl-peroxy-2-ethyl-hexanoat). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Der Festkörper wurde mit 179,40g Solventnaphtha eingestellt. Der Festkörpergehalt des so erhaltenen Produktes wurde zu 60,00 %, die Säurezahl zu 9,00 mg KOH / g (bezogen auf den Festkörper) und die Viskosität (bei 23°C, 55%-ig in Solventnaphtha) zu 2000 m Pa s ((2500 s⁻¹) (CAP03) (DIN ISO 2884-1) bestimmt. Die OH - Zahl wurde zu 155,6 mg KOH / g bestimmt.

75 Gew.-Teile des so erhaltenen Polyacrylatpolyols wurden in 16,3 Gewichtsteilen Butylacetat angelöst. Zu diesem Gemisch wurden 8,7 Gewichtsteile Aerosil ® 380 (handelsübliche hydrophile Kieselsäure mit einer mittleren Primärteilchengröße von 7 nm und einer spezifischen BET-Oberfläche von 380 m²/g der Firma Evonik) zugegeben. Anschließend erfolgte die Homogenisierung des so erhaltenen Gemisches in einem Dissolver (VDH-1 der Firma Vollrath, Umfanggeschwindigkeit 8 - 28 m/s) bei einer Temperatur von 60°C. Abschließend wurde das Gemisch in einer Rührwerksmühle (Typ ZWM 46, Mahlkörper 0,6 - 0,8 mm, Typ ER 120 A, Füllgrad 85) bei einem Energieeintrag von 0,18kWh pro kg Mahlgut und einer Maximaltemperatur der Paste von 60°C vermahlen. Die so erhaltene Paste wurde als Rheologiehilfsmittel eingesetzt.

### Herstellung der Thixotropierungsmittels T2

Analog zur Herstellung des Thixotropierungsmittels T1 wurde das Thixotropierungsmittel T2 hergestellt, allerdings mit folgenden Unterschieden:

Es wurde zunächst eine 65%ige Lösung in Solventnaphtha eines Polyacrylatpolyols aus folgenden Monomerbausteinen hergestellt: 32 Gew.-% n-Butylacrylat, 14 Gew.-% n-Butylmethacrylat, 13 Gew.-% Styrol, 20 Gew.-% Hydroxyethylacrylat, 20 Gew.-% 4-Hydroxybutylacrylat und 1 Gew.-% Acrylsäure.

Zu 43,8Gew.-% dieser Polyacrylatpolyollösung werden 11,1 Gew.-% Aerosil ® R812 (handelsübliche hydrophobe Kieselsäure mit einer mittleren Primärteilchengröße von 7 nm und einer spezifischen BET-Oberfläche von 260 m²/g der Firma Evonik), 21,7 Gew.-% Xylol und 23,4 Gew.-% Butanol zugegeben analog zur Herstellung von T1 zu einem Thixotropierungsmittel T2 verarbeitet.

### Herstellung des Härters

53 Gew.-% einer 90%igen Lösung eines handelsüblichen Hexamethylenisocyanurates (Handelsprodukt Basonat® HI190 der BASF SE), 23 Gew.-% einer 70%igen Lösung eines Isophorondiisocyanat-Isocyanurates (Handelsprodukt Desmodur® N 4470 der Bayer Material Science), 10 Gew.-% Butylacetat, 10 Gew.-% Solventnaphtha und 4 Gew.-% einer Kataysatorlösung (K1) werden gemischt. Die Katalysatorlösung (K1) wird aus 39,35 Gew.-% 2-Ethylhexylphosphorsäureester, 50 Gew.-% Methoxypropylacetat und 10, 65 Gew.-% Triethylamin erhalten.

### Herstellung und Applikation der Beschichtungsmittel des Vergleichsbeispiels V1 und des erfindungsgemäßen Beispiels 1

Die Bindemittelmischung des Vergleichsbeispiel V1 und die Bindemittelmischung des erfindungsgemäßen Beispiels 1 wurden durch Vermischen der in Tab. 1 angegebenen Komponenten hergestellt. Der Klarlack des Vergleichsbeispiels V1 und der Klarlack des erfindungsgemäßen Beispiels 1 wurden dadurch hergestellt, dass jeweils 100 Gewichtsteile der Bindemittelmischung mit den in Tab. 2 angegebenen Gewichtsteilen des Härters vereinigt und solange verrührt werden, bis eine homogene Mischung entsteht.

**Tabelle 1: Zusammensetzung der Bindemittelmischungen des Vergleichsbeispiels 1 und des erfindungsgemäßen Beispiels 1 in Gewichtsteilen**

| | Vergleichsbeispiel V1 | Beispiel 1 |
|---|---|---|
| Acrylatharz A1 | 55,00 | 55,00 |
| Cymel 202 ¹⁾ | 16,00 | 16,00 |
| Thix.paste T2 | 2,00 | 2,00 |
| Thix.paste T1 | 4,00 | 4,00 |
| Disperbyk 161 ²⁾ | 0,3 | 0,3 |
| Ethoxypropylacetat | 4,03 | 4,03 |
| Tinuvin 123 ³⁾ | 0,8 | 0,8 |
| Tinuvin 384 - 2 ⁴⁾ | 1,1 | 1,1 |
| Solvent Naphta 160/180 | 3 | 3 |
| Byk 325 ⁵⁾ | 0,15 | 0,15 |
| GB - Ester ⁶⁾ | 1,5 | 1,5 |
| Testbenzin 145 / 200 | 2 | 2 |
| Butyldiglykolacetat | 3 | 3 |
| 1-Methoxypropylacetat | 3 | 3 |
| Butylglykolacetat | 4 | 4 |
| Triethylamin | 0,8 | 0 |
| 30 % ige Lösung von DBN in Butanol ⁷⁾ | 0 | 0,2 |

| | | |
|---|---|---|
| Erläuterungen zu Tabelle 1: ¹⁾ handesübliches Methoxymethylbutoxybutylmelaminharz, 82,7%ig in n-Butanol, der Firma Cytec Industries ²⁾ 30%ige Lösung in Methoxypropylacetat und Butylacetat eines handesüblichen Dispergiermittels auf Basis eines hochmolekularen Blockcopolymeren der Firma Byk Chemie ³⁾ Tinuvin® 123, handelsübliches Lichtschutzmittel auf Basis eines sterisch gehinderten Amins der Firma Ciba ⁴⁾ Tinuvin® 384, handelsübliches Lichtschutzmittel auf Basis eines Benztriazols der Firma Ciba ⁵⁾ 52%ige Lösung eines handesüblichen Verlaufsmittels auf Basis eines polyethermodifizierten Methylalkylpolysiloxancopolymeren der Firma Byk Chemie ⁶⁾ Glykolsäurebutylester, handesübliches Lösemittel der Firma Helm AG ⁷⁾ 30%ige Lösung von DBN (1,5-Diazabicyclo[4.3.0]non-5-en) in Butanol | | |

**Tabelle 2: Zusammensetzung der Beschichtungsmittel des Vergleichsbeispiels 1 und des erfindungsgemäßen Beispiels 1**

| | Vergleichsbeispiel V1 | Beispiel 1 |
|---|---|---|
| Zugabe von Härter auf 100 Gewichtsteile Stammlack | 36,1 | 36 |

Die Herstellung der Beschichtungen erfolgte dadurch, dass das Beschichtungsmittel des Vergleichsbeispiels 1 und das Beschichtungsmittel des erfindungsgemäßen Beispiels 1 direkt nach ihrer Herstellung mittels Spritzen auf Prüfbleche appliziert wurde, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren. Die Basislackschicht und die Klarlackschicht wurden gemeinsam während 22 Minuten bei 140°C gehärtet. Die resultierende Basislackierung wies eine Schichtdicke von 7,5 µm auf, die resultierende Klarlackierung eine Schichtdicke von ca. 35 µm.

### Beurteilung der Spritznebelaufnahme

Um die Robustheit der Materialien hinsichtlich der Spritznebelaufnahme zu testen, wurde in den frisch applizierten Klarlackfilm nach 2 Minuten Ablüftzeit noch einmal mit Hilfe der Spritzapplikation weiterer Klarlack appliziert. Die Oberflächengüte der Oberfläche, in die nachgenebelt wurde, wurde dann hinsichtlich Ihrer Kocherstabilität bzw. Spritznebelempfindlichkeit visuell untersucht. Die Ergebnisse sind in der folgenden Tabelle 3 zusammengefasst.

**Tabelle 3: Beurteilung der Kocherstabilität**

| Probe | Spritznebelkocher nach 2 Minuten |
|---|---|
| Vergleichsbeispiel V1 | Starke Kocherausbildung, Verteilung über die gesamte Prüffläche |
| Beispiel 1 | Äußerst geringe Kocherausbildung, weniger und deutlich kleinere Kocher als im Vergleichsbeispiel V1 |

Zusätzlich wurde von den Beschichtungen des Vergleichsbeispiels V1 und des erfindungsgemäßen Beispiels 1 noch die Chemikalienbeständigkeit mit Hilfe der Gradientenofenmethode untersucht. Die Ergebnisse sind in Tabelle 4 dargestellt.

Zur Bestimmung der Chemikalienbeständigkeit werden auf die oben beschriebenen, mit den gehärteten Beschichtungen versehenen Prüfbleche (Gradientenofenbleche der Firma Byk-Gardener) mittels einer Pipette Tropfen (ca. 0,25 ml) einer 20%igen Schwefelsäurelösung im Abstand von 2cm aufgebracht. In einem Temperaturgradientenofen (der Firma Byk-Gardener) werden sie 30 min einem Temperaturgradienten in Längsrichtung des Bleches von 35 bis 80°C unterworfen. Im Anschluss an die Einwirkung der Substanzen wurden diese unter fließendem Wasser entfernt und die Beschädigungen nach 24 h visuell beurteilt. Zur Beurteilung der Beständigkeit wird der Bereich (Temperatur) eines ersten sichtbaren Angriffs des Klarlacks angegeben. Die Ergebnisse sind in Tabelle 4 ("Beginn Beschädigung nach 24h (°C)") angegeben. Nach dieser ersten Beurteilung der Beschädigung werden die Prüfbleche 2h bei 80°C im Umluftofen gelagert und erneut die Beschädigung visuell beurteilt. Die Ergebnisse sind in Tabelle 4 ("Beginn Beschädigung nach 2h 80°C (°C)") angegeben.

**Tabelle 4: Beurteilung der Chemikalienbeständigkeit**

| Substanz | Beginn Beschädigung | V1 | Bsp.1 |
|---|---|---|---|
| | | | |
| Schwefelsäure | Beg. Beschäd. nach 24h (°C) | 45 | 45 |
| Schwefelsäure | Beg. Beschäd. nach 2h 80° C (°C) | 49 | 48 |
| | | | |
| Natronlauge | Beg. Beschäd. nach 24h (°C) | 58 | 57 |
| Natronlauge | Beg. Beschäd. nach 2h 80° C (°C) | 66 | 64 |
| | | | |
| Pankreatin | Beg. Beschäd. nach 24h (°C) | 38 | 38 |
| Pankreatin | Beg. Beschäd. Nach 2h 80°C (°C) | 62 | 66 |
| | | | |
| Baumharz | Beg. Beschäd. nach 24h (°C) | 45 | 43 |
| Baumharz | Beg. Beschäd. nach 2h 80° C (°C) | 68 | 68 |
| | | | |
| VE Wasser | Beg. Beschäd. nach 24h (° C) | 66 | 62 |
| VE Wasser | Beg. Beschäd. nach 2h 80°C (°C) | 66 | > 75 |

Die Ergebnisse in Tabelle 4 zeigen, dass durch den Zusatz von 1,5-Diazabicyclo[4.3.0]non-5-en die Chemikalienbeständigkeit der resultierenden Beschichtung nicht negativ beeinflusst wird.

Die Beurteilung des optischen Gesamteindrucks (Appearance) erfolgte nach pneumatischer Applikation der Beschichtungsmittel bei 2,5 bar in drei Spritzgängen auf einem handelsüblichen konventionellen Basislack schwarz uni der Firma BASF Coatings AG. Danach wird die jeweils resultierende Beschichtung 5 Minuten bei Raumtemperatur abgelüftet und anschließend bei 140°C 22 Minuten eingebrannt. Die eingebrannten Lackfilme des Beispiels 1 und des Vergleichsbeispiels 1 wurden mittels des Gerätes "Wave Scan" der Firma Byk - Gardner untersucht, wobei auf einer Strecke von 10 cm 1250 Messpunkte aufgenommen wurden. Die Reflektion wird vom Messgerät in Langwelligkeit ("Long Wave" = LW-Wert), d. h. die Varianz der Lichtintensität für Strukturen im Bereich von 0,6 mm bis 10 mm sowie in Kurzwelligkeit ("Short Wave" = SW-Wert), d. h. die Varianz der Lichtintensität für Strukturen im Bereich von 0,1 mm bis 0,6 mm, unterteilt. Die Ergebnisse der Wave-Scan-Messungen sind in Tabelle 5 und Tabelle 6 dargestellt.

**Tabelle 5: Verlauf waagerecht**

| Beispiel | Long Wave | Short Wave |
|---|---|---|
| Vergleichsbeispiel V1 | 4,2 | 19 |
| Beispiel 1 | 4,2 | 19,8 |

**Tabelle 6: Verlauf senkrecht**

| Beispiel | Long Wave | Short Wave |
|---|---|---|
| Vergleichsbeispiel V1 | 9,5 | 17,1 |
| Beispiel 1 | 7,4 | 18,3 |

Die Ergebnisse in Tabelle 5 und 6 zeigen, dass durch den Zusatz von 1,5-Diazabicyclo[4.3.0]non-5-en das Appearance der resultierenden Beschichtung nicht negativ beeinflusst wird.

### Herstellung der Beschichtungsmittel und der Beschichtungen der Beispiele 2 und 3

Analog zur Herstellung der Bindemittelmischung des Beispiels 1 werden aus den in Tab. 7 angegebenen Bestandteilen die Bindemittelmischungen der Beispiele 2 und 3 hergestellt.

**Tabellle 7:Zusammensetzung der Bindemittelmischungen der erfindungsgemäßen Beispiels 2 und 3 in Gewichtsteilen**

| | Beispiel 2 | Beispiel 3 |
|---|---|---|
| Acrylatharz A1 | 55,00 | 55,00 |
| Cymel 202 ¹⁾ | 16,00 | 16,00 |
| Thix.paste T2 | 2,00 | 2,00 |
| Thix.paste T1 | 4,00 | 4,00 |
| Disperbyk 161 ²⁾ | 0,3 | 0,3 |
| Ethoxypropylacetat | 4,03 | 4,03 |
| Tinuvin 123 ³⁾ | 0,8 | 0,8 |
| Tinuvin 384 - 2 ⁴⁾ | 1,1 | 1,1 |
| Solvent Naphta 160/180 | 3 | 3 |
| Byk 325 ⁵⁾ | 0,15 | 0,15 |
| GB - Ester ⁶⁾ | 1,5 | 1,5 |
| Testbenzin 145 / 200 | 2 | 2 |
| Butyldiglykolacetat | 3 | 3 |
| 1-Methoxypropylacetat | 3 | 3 |
| Butylglykolacetat | 4 | 4 |
| Triethylamin | 0,8 | 0 |
| 30 % ige Lösung von DBN in Butanol ⁷⁾ | 0,2 | 0 |
| 30 % ige Lösung von DBU in Butanol ⁸⁾ | 0 | 0,2 |

| | | |
|---|---|---|
| Erläuterungen zu Tabelle 7: ¹⁾ handesübliches Methoxymethylbutoxybutylmelaminharz, 82ig in Butanol, der Firma Cytec Industries ²⁾ 30%ige Lösung in Methoxypropylacetat und Butylacetat eines handesüblichen Dispergiermittels auf Basis eines hochmolekularen Blockcopolymeren der Firma Byk Chemie ³⁾ Tinuvin® 123, handelsübliches Lichtschutzmittel auf Basis eines sterisch gehinderten Amins der Firma Ciba ⁴⁾ Tinuvin® 384, handelsübliches Lichtschutzmittel auf Basis eines Benztriazols der Firma Ciba ⁵⁾ 52%ige Lösung eines handesüblichen Verlaufsmittels auf Basis eines polyethermodifizierten Methylalkylpolysiloxancopolymeren der Firma Byk Chemie ⁶⁾ Glykolsäurebutylester, handesübliches Lösemittel der Firma Helm AG ⁷⁾ 30%ige Lösung von DBN (1,5-Diazabicyclo[4.3.0]non-5-en) in Butanol ⁸⁾ 30%ige Lösung von DBU (1,8-Diazabicyclo[5.4.0]undec-7-en) in Butanol | | |

Analog zur Herstellung des Beschichtungsmittel des Beispiels 1 werden aus dem in Tabelle 8 angegebenen Gewichtsteilen des Härters, jeweils bezogen auf 100 Gewichtsteile Bindemittelmischung, die Beschichtungsmittel der Beispiele 2 und 3 hergestellt.

**Tabelle 8: Zusammensetzung der Beschichtungsmittel der erfindungsgemäßen Beispiele 2 und 3**

| | Beispiel 2 | Beispiel 3 |
|---|---|---|
| Zugabe von Härter auf 100 Gewichtsteile Stammlack | 36 | 36 |

Um die katalytische Aktivität der unterschiedlichen Amine zu bewerten, wurde der Umsatz der Isocyanatgruppen in Abhängigkeit von der Härtungszeit bei 140°C mithilfe der IR-Spektroskopie (ATR-Methode) verfolgt. Dabei zeigte sich, dass sowohl für das erfindungsgemäße Beispiel 2 als auch für das erfindungsgemäße Beispiel 3 ein höherer Umsatz der Isocyanatgruppen gefunden wurde als für das Vergleichsbeispiel V1.

Außerdem wurde auch für die Beschichtungsmittel der Beispiele 2 und 3 die Spritznebelaufnahme visuell beurteilt, wie für das Vergleichsbeispiel V1 und das Beispiel 1 beschrieben wurde. Die Ergebnisse sind in Tabelle 9 dargestellt.

**Tabelle 9: Beurteilung der Kocherstabilität**

| Probe | Spritznebelkocher nach 2 Minuten |
|---|---|
| Beispiel 2 | Äußerst geringe Kocherausbildung, weniger und deutlich kleinere Kocher als im Vergleichsbeispiel V1, geringfügig besseres Erscheinungsbild als Beispiel 1 |
| Beispiel 3 | Äußerst geringe Kocherausbildung, weniger und deutlich kleinere Kocher als im Vergleichsbeispiel V1, geringfügig besseres Erscheinungsbild als Beispiel 2 |

## Patentansprüche

1. Beschichtungsmittel enthaltend
mindestens eine hydroxylgruppenhaltige Verbindung (A),
mindestens eine isocyanatgruppenhaltige Verbindung (B),
mindestens 5,0 Gew.-%, bezogen auf die nichtflüchtigen Bestandteile des Beschichtungsmittels, mindestens eines Aminoplastharzes (C),
**dadurch gekennzeichnet, dass**
das Beschichtungsmittel mindestens ein ungesättigtes cyclisches, sterisch gehindertes Amin (D) enthält und
das Beschichtungsmittel weniger als 2,5 mol-%, bezogen auf die Summe aus Hydroxylgruppen, Isocyanatgruppen und hydrolysierbaren Silangruppen, an hydrolysierbaren Silangruppen enthält.

2. Beschichtungsmittel nach Anspruch 1, **dadurch gekennzeichnet, dass** das Amin (D) ein bicyclisches Amin ist.

3. Beschichtungsmittel nach Anspruch 1 oder 2, **dadurch gekennzeichnet, dass** das Amin 1,5-Diazabicyclo[4.3.0]non-5-en oder 1,8-Diazabicyclo[5.4.0]undec-7-en ist.

4. Beschichtungsmittel nach einem der Ansprüche 1 bis 3, **dadurch gekennzeichnet, dass** das Beschichtungsmittel 0,001 bis 1,0 Gew.-%, bezogen auf die nichtflüchtigen Bestandteile des Beschichtungsmittels, des cyclischen Amins (D) enthält.

5. Beschichtungsmittel nach einem der Ansprüche 1 bis 4, **dadurch gekennzeichnet, dass** das Beschichtungsmittel 8 bis 30,0 Gew.-%, bezogen auf die nichtflüchtigen Bestandteile des Beschichtungsmittels, mindestens eines Aminoplastharzes enthält.

6. Beschichtungsmittel nach einem der Ansprüche 1 bis 5, **dadurch gekennzeichnet, dass** das Beschichtungsmittel 0,1 bis 5,0 Gew.-%, bezogen auf die nichtflüchtigen Bestandteile des Beschichtungsmittels, mindestens eines säurehaltigen Katalysators (K) enthält.

7. Beschichtungsmittel nach einem der Ansprüche 1 bis 6, **dadurch gekennzeichnet, dass** das Beschichtungsmittel 0,5 bis 3,0 Gew.-%, bezogen auf die nichtflüchtigen Bestandteile des Beschichtungsmittels, mindestens eines säurehaltigen Katalysators (K) enthält.

8. Beschichtungsmittel nach einem der Ansprüche 1 bis 7, **dadurch gekennzeichnet, dass** das Beschichtungsmittel als hydroxylgruppenhaltige Verbindung (A) Polyacrylatpolyole und/oder Polymethacrylatpolyole und/oder Polyester enthält.

9. Beschichtungsmittel nach einem der Ansprüche 1 bis 8, **dadurch gekennzeichnet dass** das Polyacrylatpolyol und/oder Polymethacrylatpolyol (A) eine OH-Zahl von 60 bis 300 mg KOH/g aufweist.

10. Beschichtungsmittel nach einem der Ansprüche 1 bis 9, **dadurch gekennzeichnet dass** das Beschichtungsmittel als isocyanatgruppenhaltige Verbindung (B) Hexamethylen-1,6-diisocyanat, Isophorondiisocyanat und/oder 4,4'-Methylendicyclohexyldiisocyanat, deren Biuret-Dimere und/oder Isocyanurat-Trimere enthält.

11. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 10 aufgetragen wird.

12. Mehrstufiges Beschichtungsverfahren nach Anspruch 11, **dadurch gekennzeichnet, dass** nach dem Auftrag der pigmentierten Basislackschicht der aufgebrachte Basislack zunächst bei Temperaturen von Raumtemperatur bis 80°C getrocknet wird und nach dem Auftrag des Beschichtungsmittel nach einem der Ansprüche 1 bis 10 bei Temperaturen von 30 bis 200°C während einer Zeit von einer Minute bis zu 10 Stunden gehärtet wird.

13. Verwendung der Beschichtungsmittel nach einem der Ansprüche 1 bis 10 als Klarlack beziehungsweise Anwendung des Verfahrens nach Anspruch 11 oder 12 für die Automobilserienlackierung und die Automobilreparaturlackierung.

14. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einem Beschichtungsmittel nach einem der Ansprüche 1 bis 10 hergestellt worden ist.

15. Verwendung von ungesättigten cyclischen, sterisch gehinderten Aminen, in Beschichtungsmitteln enthaltend
mindestens eine hydroxylgruppenhaltige Verbindung (A),
mindestens eine isocyanatgruppenhaltige Verbindung (B),
mindestens 5,0 Gew.-%, bezogen auf die nichtflüchtigen Bestandteile des Beschichtungsmittels, mindestens eines Aminoplastharzes (C),
zur Verbesserung der Kocherstabilität, und wobei das Beschichtungsmittel weniger als 2,5 mol-%, bezogen auf die Summe aus Hydroxylgruppen, Isocyanatgruppen und hydrolysierbaren Silangruppen, an hydrolisierbaren Silangruppen enthält.

## Claims

1. Coating composition comprising
at least one compound (A) containing hydroxyl groups,
at least one compound (B) containing isocyanate groups,
at least 5.0% by weight, based on the nonvolatile constituents of the coating composition, of at least one amino resin (C),
**characterized in that**
the coating composition comprises at least one unsaturated, cyclic, sterically hindered amine (D) and
the coating composition contains less than 2.5 mol% of hydrolyzable silane groups, based on the sum of hydroxyl groups, isocyanate groups, and hydrolyzable silane groups.

2. Coating composition according to Claim 1, **characterized in that** the amine (D) is a bicyclic amine.

3. Coating composition according to Claim 1 or 2, **characterized in that** the amine is 1,5-diazabicyclo[4.3.0]non-5-ene or 1,8-diazabicyclo[5.4.0]undec-7-ene.

4. Coating composition according to any of Claims 1 to 3, **characterized in that** the coating composition contains 0.001% to 1.0% by weight, based on the nonvolatile constituents of the coating composition, of the cyclic amine (D).

5. Coating composition according to any of Claims 1 to 4, **characterized in that** the coating composition contains 8% to 30.0% by weight, based on the nonvolatile constituents of the coating composition, of at least one amino resin.

6. Coating composition according to any of Claims 1 to 5, **characterized in that** the coating composition contains 0.1% to 5.0% by weight, based on the nonvolatile constituents of the coating composition, of at least one acid-containing catalyst (K).

7. Coating composition according to any of Claims 1 to 6, **characterized in that** the coating composition contains 0.5% to 3.0% by weight, based on the nonvolatile constituents of the coating composition, of at least one acid-containing catalyst (K).

8. Coating composition according to any of Claims 1 to 7, **characterized in that** the coating composition comprises polyacrylate polyols and/or polymethacrylate polyols and/or polyesters as hydroxyl-containing compound (A).

9. Coating composition according to any of Claims 1 to 8, **characterized in that** the polyacrylate polyol and/or polymethacrylate polyol (A) has an OH number of 60 to 300 mg KOH/g.

10. Coating composition according to any of Claims 1 to 9, **characterized in that** the coating composition comprises hexamethylene 1,6-diisocyanate, isophorone diisocyanate and/or 4,4'-methylenedicyclohexyl diisocyanate, the biuret dimers and/or isocyanurate trimers thereof as isocyanato-containing compound (B).

11. Multistage coating process, **characterized in that** a pigmented basecoat and thereafter a film of the coating composition according to any of Claims 1 to 10 is applied to an uncoated or precoated substrate.

12. Multistage coating process according to Claim 11, **characterized in that**, after the application of the pigmented basecoat, the applied basecoat material is first dried at temperatures from room temperature to 80°C and, after the application of the coating composition according to any of claims 1 to 10, the coating is cured at temperatures from 30 to 200°C for a time of one minute up to 10 hours.

13. Use of the coating compositions according to any of Claims 1 to 10 as a clearcoat material or use of the process according to Claim 11 or 12 for automotive OEM finishing and automotive refinish.

14. Multi-coat effect and/or color paint system comprising at least one pigmented basecoat and at least one clearcoat film disposed thereon, **characterized in that** the clearcoat has been produced from a coating composition according to any of Claims 1 to 10.

15. Use of unsaturated, cyclic, sterically hindered amines, in coating compositions comprising at least one compound (A) containing hydroxyl groups,
at least one compound (B) containing isocyanate groups,
at least 5.0% by weight, based on the nonvolatile constituents of the coating composition, of at least one amino resin (C),
for improving the solvent popping stability, and where the coating composition contains less than 2.5 mol% of hydrolyzable silane groups, based on the sum of hydroxyl groups, isocyanate groups, and hydrolyzable silane groups.

## Revendications

1. Composition de revêtement, contenant au moins un composé contenant des groupes hydroxy (A), au moins un composé contenant des groupes isocyanate (B),
au moins 5,0 % en poids, par rapport aux composants non volatils de la composition de revêtement, d'au moins une résine aminoplaste (C),
**caractérisée en ce que**
la composition de revêtement contient au moins une amine cyclique insaturée (D) à empêchement stérique et la composition de revêtement contient moins de 2,5 % en moles de groupes silane hydrolysables, par rapport à la somme des groupes hydroxy, des groupes isocyanate et des groupes silane hydrolysables.

2. Composition de revêtement selon la revendication 1, **caractérisée en ce que** l'amine (D) est une amine bicyclique.

3. Composition de revêtement selon la revendication 1 ou 2, **caractérisée en ce que** l'amine est le 1,5-diazabicyclo[4.3.0]non-5-ène ou le 1,8-diazabicyclo[5.4.0]undéc-7-ène.

4. Composition de revêtement selon l'une quelconque des revendications 1 à 3, **caractérisée en ce que** la composition de revêtement contient de 0,001 à 1,0 % en poids de l'amine cyclique (D), par rapport aux composants non volatils de la composition de revêtement.

5. Composition de revêtement selon l'une quelconque des revendications 1 à 4, **caractérisée en ce que** la composition de revêtement contient de 8 à 30,0 % en poids d'au moins une résine aminoplaste, par rapport aux composants non volatils de la composition de revêtement.

6. Composition de revêtement selon l'une quelconque des revendications 1 à 5, **caractérisée en ce que** la composition de revêtement contient de 0,1 à 5,0 % en poids d'au moins un catalyseur (K) contenant un acide, par rapport aux composants non volatils de la composition de revêtement.

7. Composition de revêtement selon l'une quelconque des revendications 1 à 6, **caractérisée en ce que** la composition de revêtement contient de 0,5 à 3,0 % en poids d'au moins un catalyseur (K) contenant un acide, par rapport aux composants non volatils de la composition de revêtement.

8. Composition de revêtement selon l'une quelconque des revendications 1 à 7, **caractérisée en ce que** la composition de revêtement contient en tant que composé contenant des groupes hydroxy (A) des polyacrylatepolyols et/ou des polyméthacrylatepolyols et/ou des polyesters.

9. Composition de revêtement selon l'une quelconque des revendications 1 à 8, **caractérisée en ce que** le polyacrylatepolyol et/ou le polyméthacrylate-polyol (A) présente un indice de groupes OH de 60 à 300 mg de KOH/g.

10. Composition de revêtement selon l'une quelconque des revendications 1 à 9, **caractérisée en ce que** la composition de revêtement contient en tant que composé contenant des groupes isocyanate (B) de l'hexaméthylène-1,6-diisocyanate, de l'isophorone-diisocyanate et/ou du 4,4'-méthylènedicyclohexyl-diisocyanate, leurs dimères-biuret et/ou triméres-isocyanurate.

11. Procédé de revêtement en plusieurs étapes, **caractérisé en ce qu'**on applique sur un subjectile éventuellement pré-enduit une couche de peinture de fond pigmentée et ensuite une couche de la composition de revêtement selon l'une quelconque des revendications 1 à 10.

12. Procédé de revêtement en plusieurs étapes selon la revendication 11, **caractérisé en ce qu'**après l'application de la couche de peinture de fond pigmentée la peinture de fond appliquée est d'abord séchée à des températures dans la plage allant de la température ambiante à 80 °C et, après l'application de la composition de revêtement selon l'une quelconque des revendications 1 à 10, est séchée à des températures de 30 à 200 °C pendant une durée d'une minute à 10 heures.

13. Utilisation de la composition de revêtement selon l'une quelconque des revendications 1 à 10, en tant que vernis ou utilisation du procédé selon la revendication 11 ou 12 pour la mise en peinture en série d'automobiles et le peinturage de réparation d'automobiles.

14. Revêtement de peinture multicouche colorant et/ou à effet à base d'au moins une couche de peinture de fond pigmentée et d'au moins une couche de vernis disposée sur celle-ci, **caractérisé en ce que** la couche de vernis a été produite à partir d'une composition de revêtement selon l'une quelconque des revendications 1 à 10.

15. Utilisation d'amines cycliques insaturées, à empêchement stérique, dans des compositions de revêtement contenant
au moins un composé contenant des groupes hydroxy (A), au moins un composé contenant des groupes isocyanate (B),
au moins 5,0 % en poids, par rapport aux composants non volatils de la composition de revêtement, d'au moins une résine aminoplaste (C),
pour l'amélioration de la résistance à la vacuolisation, et la composition de revêtement contenant moins de 2,5 % en moles de groupes silane hydrolysables, par rapport à la somme des groupes hydroxy, des groupes isocyanate et des groupes silane hydrolysables.
